Europäisches Patentamt

**European Patent Office**

**Office européen des brevets**

(19)

(11) Numéro de publication: **0 185 286**
**B1**

(12) **FASCICULE DE BREVET EUROPEEN**

(45) Date de publication du fascicule du brevet: **10.10.90**

(21) Numéro de dépôt: **85115622.4**

(22) Date de dépôt: **09.12.85**

(51) Int. Cl.⁵: **B 23 Q 7/04,** B 23 Q 3/06,
B 23 Q 16/08, B 23 Q 7/14

(54) **Procédé de chargement automatique de stations de travail et dispositif pour la mise en oeuvre de ce procédé.**

(30) Priorité: **19.12.84 CH 6028/84**

(43) Date de publication de la demande:
**25.06.86 Bulletin 86/26**

(45) Mention de la délivrance du brevet:
**10.10.90 Bulletin 90/41**

(84) Etats contractants désignés:
**DE FR GB IT SE**

(56) Documents cités:
**EP-A-0 117 557**
**DE-A-2 519 249**
**FR-A-2 220 345**

(73) Titulaire: **ARCOFIL S.A.**
**8, rue de la Citadelle**
**CH-2610 St-Imier (CH)**

(72) Inventeur: **Schenk, Bernard**
**8, rue de la Citadelle**
**CH-2610 - St-Imier (CH)**

(74) Mandataire: **Caron, Gérard**
**ICB Ingénieurs Conseils en Brevets SA Passage**
**Max. Meuron 6**
**CH-2001 Neuchâtel (CH)**

**Description**

Le chargement automatique de stations de travail est de plus en plus fréquemment réalisé à l'aide de robots. Dans les procédés et dispositifs connus de ce genre, les pièces à traiter sont saisies directement par un robot, qui les amène une à une d'une station de chargement à une station de travail, où le robot les abandonne à un réceptacle de cette dernière, qui est pourvu d'organes de positionnement et de serrage capables de tenir ces pièces fermement et dans une position précise. Lorsque leur traitement est terminé, elles sont libérées et le robot vient les reprendre pour les convoyer éventuellement jusqu'à une autre station de travail, avant de les amener à une station de déchargement.

Selon la nature des pièces à traiter et de l'agencement du réceptacle de la station de travail, qui est destiné à recevoir ces pièces, il peut être malaise de régler un robot de façon qu'il présente à ce réceptacle les pièces à traiter dans la position requise, en particulier lorsque cette dernière doit être très précise. De plus, un tel réceptacle ne peut tenir les pièces à traiter que dans une seule position, de sorte qu'en principe, une seule de leurs faces peut être traitée à une station de travail déterminée. Les pièces à traiter sur plusieurs faces doivent donc être amenées successivement à autant de stations de travail différentes, ce qui nécessite un équipement aussi volumineux qu'onéreux, souvent accompagné d'un ralentissement sensible de la production.

Le plus grave inconvénient des procédés et dispositifs connus de ce genre réside cependant dans le fait que les réceptacles en question se trouvant au point de chute des copeaux. Quelque puissants que soient les jets d'évacuation des copeaux, ils n'éliminent pas sans coup férir tous les copeaux de ces réceptacles, où la présence d'un seul d'entre eux fausse la position de la pièce reçue et en perturbe le traitement.

L'invention vise principalement à remédier à ces inconvénients.

Grâce au procédé défini par la revendication 1 et au dispositif pour sa mise en oeuvre, qui est défini par la revendication 5, il suffit de modifier le porte-pièce pour être en mesure de traiter des pièces qui, d'une série à l'autre, peuvent avoir des formes très différentes. Ainsi, un jeu de porte-pièces, dont chacun est adapté aux pièces de l'une des séries à traiter, ne constitue pas un investissement onéreux. En outre, il est aisé de concevoir les porte-pièces de ce jeu de façon que chacun d'eux puisse être enserré par un seul et même bloc de serrage.

Les avantages des particularités définies par les revendications 2 à 4 et 6 à 9 apparaîtront au cours de la description suivante.

Une forme d'exécution du dispositif selon l'invention est représentée schématiquement et à simple titre d'exemple au dessin, qui illustre en même temps deux exemples de mise en oeuvre du procédé selon l'invention ainsi qu'une variante.

La figure 1 est une vue en perspective de cette forme d'exécution et elle illustre en même temps le premier exemple de mise en oeuvre du procédé selon l'invention.

La figure 2 est une vue en élévation à plus grande échelle d'une partie de la figure 1 et elle illustre la variante de mise en oeuvre du procédé.

La figure 3 est une vue en perspective de la pièce travaillée.

La figure 4 est une coupe selon la ligne IV—IV de la figure 2.

La figure 5 est une vue en plan, qui illustre le deuxième exemple de mise en oeuvre du procédé.

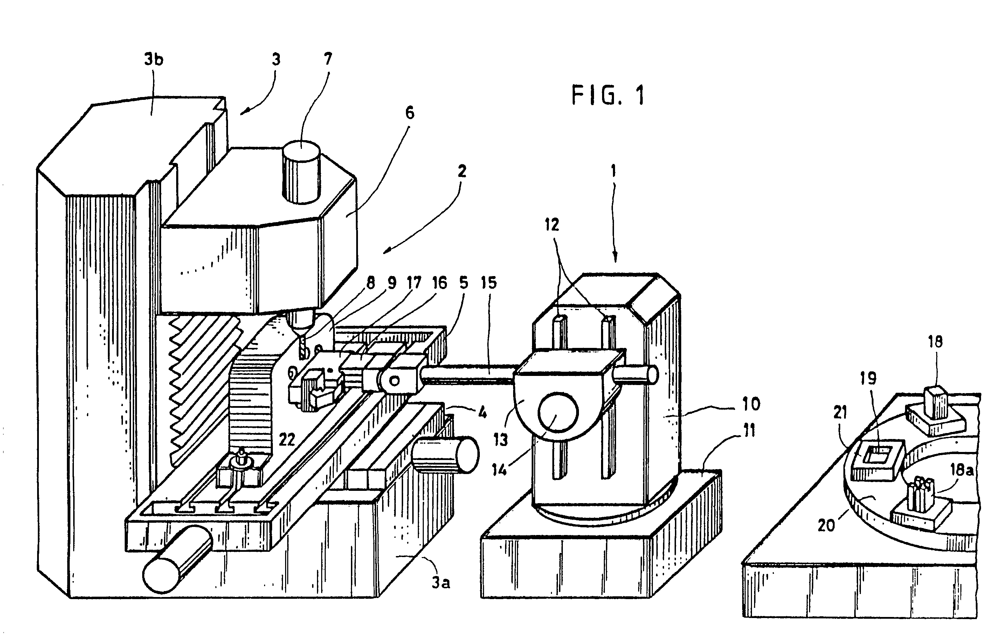

En figure 1, le robot 1 vient de charger une fraiseuse 2, qui comprend un bâti 3 en forme de "L". Sur la partie horizontale 3a du bâti 3 est monté un coulisseau longitudinal 4, que l'on peut rapprocher ou éloigner de la partie verticale 3b du bâti 3. Un coulisseau transversal 5 est monté sur le coulisseau 4 et une tête 6 est montée coulissante sur la partie 3b du bâti 3. Cette tête porte un appareil 7, qui entraîne une fraise 8 en rotation. Un bloc de serrage 9, décrit en détail ci-après, est fixé rigidement au coulisseau 5.

Le robot 1 comprend un corps 10, qui peut pivoter sur un socle 11. Des rails 12, solidaires du corps 10, servant de guidage à un bloc 13, qui peut ainsi se déplacer verticalement par rapport au corps 10. Le bloc 13 peut, en outre, pivoter autour d'un tourillon 14. Il porte un bras cylindrique 15, qui peut coulisser et tourner autour de son axe dans le bloc 13. A son extrémité, le bras 15 est muni d'une pince 16. Celle-ci tient en permanence un porte-pièce 17, décrit en détail ci-après et adapté à la forme des pièces à traiter 18.

Dans la forme d'exécution représentée, la forme des pièces 18 a été choisi parallélépipédique, afin de simplifier les explications. Les pièces 18 sont amenées l'une après l'autre en 19 par une chaîne 20, équipée de réceptacles 21. Dans la forme d'exécution représentée, cette position 19 est en même temps la station de chargement des pièces à traiter 18 et celle de déchargement des pièces traitées 18a. La pièce 22, qui se trouve à la station de travail, sur la fraiseuse 2, provient de la position 19, où le robot 1 la ramènera, lorsque son usinage sera terminé.

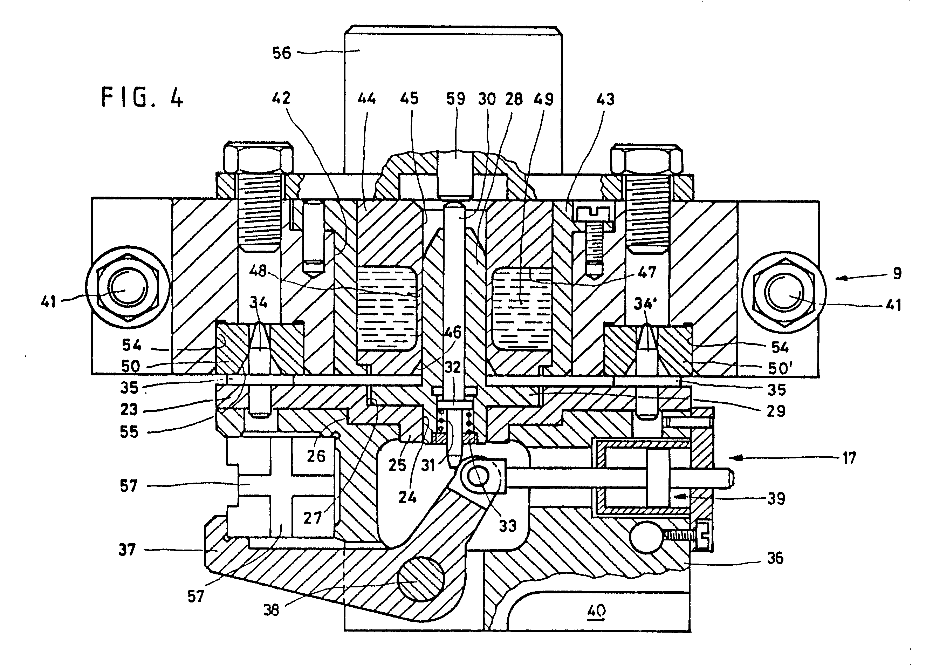

C'est l'ensemble constitué par le bloc de serrage 9 et le porte-pièce 17 qui constitue le dispositif pour la mise en oeuvre du procédé. Les divers organes de cet ensemble sont représentés à la figure 4.

Le porte-pièce 17 comprend une semelle 23 ayant la forme générale d'un rectangle allongé. Au milieu de ce rectangle, la semelle 23 présente un alésage 24 s'étendant à travers un téton 25, une portée 26 et un logement cylindrique 27. Un pivot de centrage 28, cylindrique, creux, muni d'une collerette 29, est fixé à demeure à la semelle 23, l'une de ses extrémités étant engagée dans l'alésage 24 et la collerette 29 étant noyée dans le logement 27. Quant à l'autre extrémité du pivot 28, elle est tronconique. Une tige 30 traverse l'ouverture centrale du pivot 28, dans laquelle elle peut coulisser librement, mais sans jeu. Cette tige 30 est soumise à l'action d'un ressort de rappel 31, qui est comprimé entre une collerette 32 de la tige 30 et une bague de guidage 33 fixée au pivot 28. Au voisinage de ses extrémités, la semelle 23 porte encore deux pitons d'orientation 34, 34', diamétralement opposés et équidistants du pivot 28. Ces pitons sont venus de fabrication en une pièce avec une collerette de butée 35.

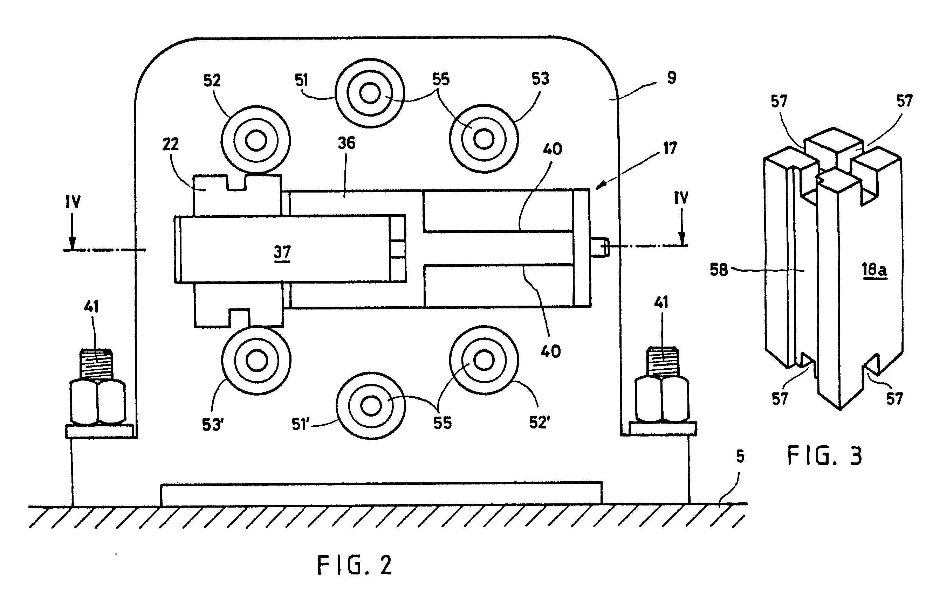

Une pince de serrage composée des deux mâchoires 36 et 37 est montée sur la semelle 23. La mâchoire 36 est fixée rigidement, mais de façon amovible, à la semelle 23 par des vis (non représentées), dans une position exactement centrée à l'aide de plots de positionnement (non représentés). La mâchoire 37 est articulée sur la mâchoire 36 et peut être actionnée dans l'un et l'autre sens autour de son tourillon 38 par un vérin 39 à double effet, pneumatique ou hydraulique, qui est incorporé dans la mâchoire 36. Celle-ci présente enfin deux évidements 40 (voir aussi figure 2).

Le bloc de serrage 9 est fixé au coulisseau 5 par deux boulons 41. Il présente une ouverture centrale cylindrique 42, dans laquelle est fixée une chemise 43. Un manchon 44 est lui-même engagé sans jeu dans la chemise 43. Son alésage 45 est adapté au pivot 28. Il débouche à l'avers du bloc de serrage par un chanfrein 46. Une creusure annulaire 47 est formée dans la face externe du manchon 44 de façon à n'en laisser subsister qu'une mince paroi élastique 48. La creusure 47 et la chemise 43 forment une chambre étanche 49, remplie d'huile qui peut être mise sous pression. Huit bouchons alésés 50, 50'; 51, 51'; 52, 52'; 53, 53' (figure 2), engagés à force dans des alvéoles 54 formés à l'avers du bloc de serrage 9, sont disposés à 45° les uns des autres autour de l'alésage 45. L'axe de l'alésage de chacun de ces huit bouchons est à une distance de celui de l'alésage 45 qui est égale à celle de l'axe de chacun des pitons 34, 34' à celui du pivot 28. Un chanfrein 55 est formé à l'entrée de l'alésage de chacun des bouchons 50, 50'; 51, 51'; 52, 52'; 53, 53'. Un vérin 56 est encore monté au revers du bloc de serrage 9.

Dans l'exemple de mise en oeuvre du procédé, qui est illustré par les figures 1 et 4, il s'agit de fraiser deux rainures en croix 57 dans chacune des petites faces de pièces 18 (figure 3) et une rainure plus large 58 dans l'une de leurs autres faces. En outre, la pince 16 du robot 1 tient le porte-pièce 17 en permanence. Elle le maintient par engagement de ses mâchoires dans les évidements 40.

Au début d'un cycle de travail, le bras 15 du robot 1 est dirigé vers la chaîne 20. Le vérin 39 maintient la mâchoire 37 écartée de la mâchoire 36. La pince du porte-pièce 17 est donc ouverte. Le robot 1 l'amène au-dessus de la pièce 18 qui se trouve en 19, puis il la fait descendre autour de cette pièce jusqu'à en qu'elle repose sur le réceptacle 21 correspondant. La pince du porte-pièce 17 est alors à la bonne hauteur par rapport à la pièce 18. Le vérin 39 produit la fermeture de la

pince du porte-pièce 17. Cette pince tient alors la pièce 18 assez fermement pour la sortir du réceptacle 21 et la diriger vers la fraisure 2. Ce dernier mouvement du robot 1 peut être rapide. Au terme de celui-ci, les axes du pivot de centrage 28 et des pitons d'orientation 34, 34' ne coïncideront donc pas nécessairement avec ceux de l'alésage 45 et des alésages des bouchons 50, 50' en raison de l'imprécision des déplacements rapides du robot 1. Le décalage du pivot 28 et des pitons 34, 34' par rapport aux alésages du bloc de serrage est cependant assez faible pour qu'en poussant le porté-pièce 17 contre le bloc de serrage 9 à l'aide du robot 1, l'extrémité tronconique du pivot 28 entre au moins dans le chanfrein 46.

Au moment de cette poussée, le robot 1 annule la liaison cinématique qui déplace sa pince 16, de façon à permettre au porte-pièce 17 de se laisser guider librement par le chanfrein 46 du bloc de serrage 9 et par l'extrémité tronconique de son pivot 28 jusqu'à ce que le pivot 28 entre dans l'alésage 45. Il en va de même des pitons 34, 34', dont la pointe conique est guidée par le chanfrein 55 des bouchons alésés 50, 50'. Le pivot 28 et les pitons 34, 34' s'engagent donc dans les ouvertures correspondantes du bloc de serrage 9, constituées par l'alésage 45 et les alésages des bouchons 50, 50'. à l'instar de fiches. Le déplacement du porte-pièce 17 en direction du bloc de serrage 9 est interrompu par les collerettes 35, qui butent contre les bouchons 50, 50'. Dans cette position, l'huile de la chambre 49 est mise sous pression, ce qui à pour effet de tendre à déformer la paroi 48 vers l'intérieur de l'alésage 45 et d'enserrer très fortement le pivot 28, au point d'empêcher le porte-pièce 17 de s'écarter du bloc de serrage 9.

Tout autre moyen de blocage du porte-pièce 17 dans la position axiale représentée par rapport au bloc de serrage 9 pourrait évidemment aussi bien être utilisé.

Parvenu à ce stade, la position du porte-pièce 17, et par conséquent de la pièce à traiter 22 qu'il tient, est déterminée exclusivement par le bloc de serrage 9 à l'exclusion du robot 1, dont la pince 16 continue cependant à tenir le porte-pièce 17. Comme le bloc de serrage 9 est lui-même fixé à un organe de la fraiseuse, la pièce 22 occupe bien la position exacte voulue sur la machine-outil. La fraise 8 peut alors entrer en action.

Si le vérin 39 n'était pas assez puissant pour tenir le pièce à traiter assez fermement pendant l'usinage, le vérin 56 serait actionné pour augmenter l'effort de serrage sur la mâchoire 37 par l'intermédiaire de la tige 30, que le ressort de rappel 31 maintient en contact avec le piston 59 du vérin 56.

Dans la position décrite, la fraise 8 taille les deux rainures en croix, visibles dans la figure 1, par des déplacements correspondants des coulisseaux 4 et 5. Le robot 1 permet à sa pince 16, comme déjà indiqué, de suivre librement les déplacements que le porte-pièce 17 effectue avec les coulisseaux 4 et 5. Après l'usinage des deux dites rainures 57, le robot 1 rétablit la liaison cinématique guidant sa pince 16. Simultanèment, la pression dans la chambre 49 est relâchée. Le robot 1 retire alors le porte-pièce 17 du bloc de serrage 9 de façon à dégager les pitons d'orientation 34, 34' des bouchons 50, 50', mais non le pivot 28 de l'alésage 45. Il fait ensuite tourner son bras 15 sur lui-même de 180°, au moins approximativement, ce qui amène la pointe des pitons 34, 34' respectivement en regard, sinon des alésages des bouchons 50' et 50, tout au moins des chanfreins 55 des ces bouchons.

Le robot 1 peut dès lors repousser le porte-pièce 17 à fond contre le bloc de serrage 9 tout en annulant derechef la liaison cinématique guidant sa pince 16, afin de lui permettre de suivre les nouveaux déplacements de la pièce en travail 22 pendant le fraisage des deux rainures en croix 57 de l'autre petite face de cette pièce.

Lorsque cet usinage est terminé, le robot 1 dégage les pitons d'orientation 34, 34' des bouchons 50' et 50, comme précédemment des bouchons 50, 50', et fait tourner son bras 15 de 90° en vue d'enficher cette fois les pitons 34, 34' dans les alésages 51, 51' du bloc de serrage. Dans cette nouvelle position, la fraise 8 peut tailler la rainure 58.

L'usinage de la pièce 22 est ainsi terminé.

Le robot dégage alors le porte-pièce 17 complètement du bloc de serrage 9 et ramène cette pièce au-dessus de la station de chargement et de déchargement 19. Le vérin 39 produit l'ouverture de la pince du porte-pièce 17, ce qui permet à la pièce usinée de tomber dans le réceptacle vide de la station 19. La chaîne 20 avance ensuite d'un pas, de sorte que le cycle suivant peut démarrer.

Les bouchons 52, 52' et 53, 53', non utilisés dans l'exemple décrit, peuvent servir à tenir le porte-pièce 17 incliné à 45°, selon les opérations à effectuer sur une autre série de pièces. Le nombre de ces bouchons pourrait, bien sûr, être augmenté de façon à permettre l'enfichage du porte-pièce 17 dans des positions inclinées différemment, par exemple à 30° ou 60°.

Au lieu de l'alésage 45 et d'un pivot 28 cylindrique, on pourrait aussi utiliser un pivot prismatique ou de toute autre section non circulaire et former dans le manchon 44 une ouverture correspondante. Quoique de telles formes soient plus compliquées à produire que celles décrites, une telle solution aurait l'avantage d'éviter les pitons d'orientations 34, 34' et les bouchons correspondants du bloc de serrage. L'orientation du porte-pièce 17 sur le bloc de serrage 9 serait assurée, en effet, par la forme même du pivot 28 et celle de l'ouverture correspondante du manchon 44. Dans un tel cas, il serait même possible d'incliner le porte-pièce 17 sur le bloc de serrage 9 sous n'importe quel angle.

Pour traiter des pièces d'une autre forme que celle choisie dans l'exemple décrit, il suffit, dans de nombreux cas, de remplacer simplement les mâchoires 36, 37 du porte-pièce. Selon la nature des opérations à effectuer, un bloc de serrage dont les axes des alésages servant à l'enfichage du porte-pièce seraient verticaux, voire inclinés, au lieu d'être horizontaux, comme ceux du bloc de serrage représenté, pourrait tout aussi bien être utilisé. Le bloc 9 pourrait d'ailleurs aussi être fixé à un organe vertical ou incliné d'une autre station de travail que celle décrite dans l'exemple représenté. L'organe de la station de travail auquel le bloc de serrage est fixé ne doit pas absolument être mobile. Il peut être constitué par une partie du bâti de cette station et même par son socle. Enfin, la station de travail n'est pas nécessairement une machine-outil destinée à usiner des pièces. Cette station pourrait résider par exemple en une imprimante par décalque.

Selon les besoins d'un utilisateur possédant déjà un robot, il peut suffire d'acquérir un seul bloc de serrage, une seule semelle correspondante de porte-pièce et un jeu de quelques mâchoires à monter sur cette semelle, pour être en mesure de charger automatiquement et avec grande précision les machines qu'il possède déjà, cela conformément au procédé selon l'invention.

Le dispositif selon l'invention est particulièrement avantageux lorsque la station de travail à charger est à commande numérique. Quant au robot, il sera de préférence du type programmable par mémorisation des mouvements qu'on lui fait accomplir au préalable à la main.

Il n'est par indispensable que le robot tienne le porte-pièce en permanence. Il peut être judicieux de lui faire abandonner le porte-pièce 17 enfiché dans le bloc de serrage 9, comme dans la variante de mise en oeuvre du procédé, qui est illustrée très sommairement par la figure 2, cela en particulier lorsque le traitement des pièces d'une série est relativement long et s'effectue dans une seule position d'enfichage du porte-pièce 17.

Dans ce cas, on jumellera avantageusement deux stations de travail identiques. Pendant qu'une première de ces stations traitera une pièce, le robot libéré en profitera pour se rendre à l'autre station de travail, y saisir le porte-pièce enfiché dans le bloc de serrage de cette autre station de travail, le dégager de ce bloc et le conduire à la station de déchargement, où il pourra produire l'ouverture de la pince de serrage de ce porte-pièce, qu'il conduira ensuite à la station de chargement où il lui fera saisir un enouvelle pièce à traiter, afin de l'amener à la station de travail libre. Lorsque le porte-pièce aura été enfiché dans le bloc de serrage de cette station libre, le robot l'abandonnera et retournera à la première station de travail pour y ceuiller le porte-pièce et la pièce traitée à cette première station. Dans ce cas, il faut naturellement un bloc de serrage et un porte-pièce pour chacune des deux stations jumelées.

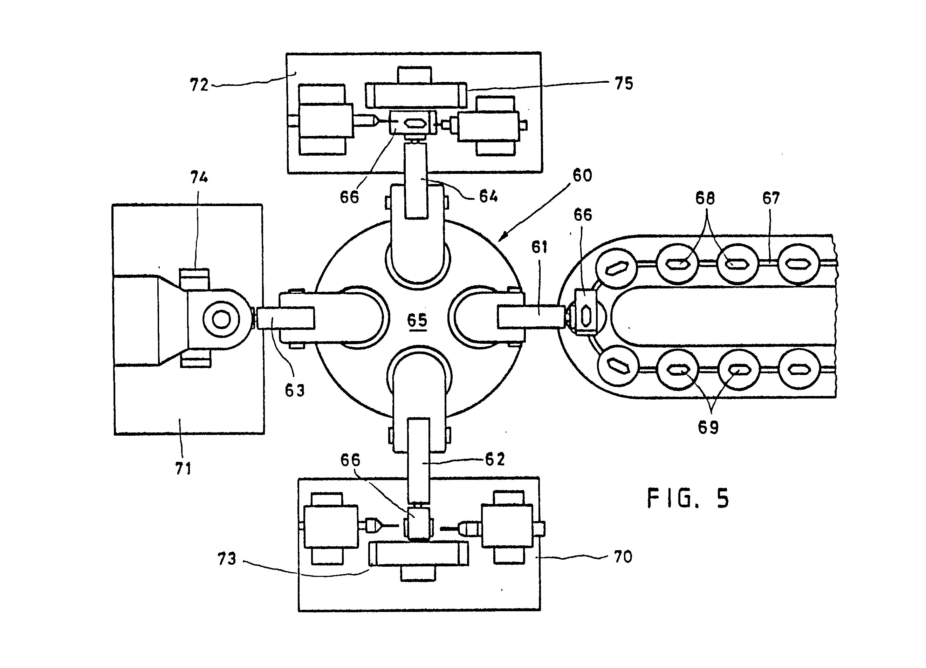

Lorsque les pièces d'une série à traiter doivent subir plusieurs opérations différentes, il peut être avantageux de mettre le procédé en oeuvre conformement au second exemple, qui est illustré par la figure 5.

Cette figure montre un robot 60 à quatre bras 61, 62, 63, 64 montés sur un plateau rotatif 65, qui tourne de 90° à chaque pas. Chacun des bras du robot 60 tient en permanence un porte-pièce 66 ne différant, en principe, du porte-pièce 17 du premier exemple que par les mâchoires de serrage des pièces à traiter.

Les quatre porte-pièces 66 sont identiques. Autour du robot 60, sont disposées: un chaîne 67, qui amène les pièces à traiter 68 et emporte les pièces traitées 69, et trois stations de travail différentes 70, 71 et 72. L'emplacement de la chaîne 67 et des stations 70, 71, 72 est choisi de façon que l'un des bras 61, 62, 63 et 64 du robot 60 se trouve au moins approximativement en regard de l'une d'elles à chaque pas du plateau 65.

Un cycle complet de travail s'effectue comme suit:

Au cours du pas qui a amené le plateau 65 dans la position représentée, le bras 61 amène une pièce traitée à la station de déchargement, c'est-à-dire au-dessus du réceptacle vide de la chaîne 67, dans lequel il permet au porte-pièce 66 qu'il tient de la laisser tomber, comme dans le premier exemple. La chaîne 67 avance alors d'un pas et le bras 61 fait saisir à la pince de serrage de son porte-pièce 66 la pièce à traiter 68 qui vient d'arriver à la station de chargement, identique à celle de déchargement.

Au cours du même pas du plateau 65, le bras 62 du robot est arrivé de la station de chargement en regard de la station de travail 70, où il a enfiché le porte-pièce 66 qu'il tient dans le bloc de serrage 73 de cette station, en vue de soumettre la pièce amenée à un premier usinage.

De même, les bras 63 et 64 ont enfiché leur porte-pièce 66 respectivement dans les blocs de serrage 74 et 75 des stations de travail 71 et 72, afin de poursuivre et de terminer l'usinage des pièces déjà partiellement usinées qu'ils tiennent.

Le plateau 65 avance d'un pas lorsque celle des opérations partielles décrites, qui est la plus longue, est terminée. A chaque pas du plateau 65, une pièce terminée est ainsi délivrée à la chaîne 67. La fragmentation décrite de l'usinage d'une pièce a manifestement pour effet d'augmenter la production. Il va de soi qu'à chaque station de travail, le déroulement des opérations est en tout point semblable à celui décrit dans le premier exemple de mise en oeuvre du procédé. Porte-pièce et blocs de serrage sont aussie agencés comme dans ce premier exemple.

Le nombre des stations de travail n'est naturellement pas limité à trois. Il suffit que le robot ait un bras de plus le nombre des stations de travail.

## Revendications

1. Procédé de chargement automatique de stations de travail, dans lequel les pièces d'une série à charger sont amenées l'une après l'autre par un robot, d'abord, d'une position de chargement jusqu'à une station de travail, puis, à la fin du travail, à une position de déchargement, caractérisé en ce que le robot (1, 60), par l'intermediaire d'un porte-pièce (17, 66) qu'il tient et qui est adapté à la géométrie des pièces de la série à charger, en position de chargement, saisit la pièce (18, 68) qui se trouve en ce que, à la station de travail (2, 70—72), le robot (1, 60) place le porte-pièce (17, 66) en regard d'un bloc de serrage (9, 73—75) fixé à un élément (5) de la station de travail (2), de façon que ce bloc de serrage puisse enserrer le porte-pièce (17, 66) et tenir ainsi la pièce (18, 68) qu'il à amenée dans une position bien déterminée, et en ce qu'en amenant la pièce (18, 68) en position de déchargement, le robot (1, 60) permet au porte-pièce (17, 66) de libérer la pièce usinée tout en continuant à tenir ce porte-pièce.

2. Procédé selon la revendication 1, caractérisé en ce que le robot (1) abandonne le porte-pièce (17) dès que celui-ci est enserré par le bloc de serrage (9) et vient le reprendre à la fin du travail sur la pièce (22).

3. Procédé selon la revendication 1, caractérisé en ce que le robot (1) tient le porte-pièce (17) en permanence au moyen d'une pince (16), et en ce qu'à la station de travail (2), il permet à ladite pince (16) de suivre librement les déplacements du bloc de serrage (9) fixé à un élément mobile (5) de la station de travail (2).

4. Procédé selon la revendication 3, caractérisé en ce qu'avant d'amener le porte-pièce (66) en position de déchargement, le robot (60) conduit ce porte-pièce (66) en regard du bloc de serrage (74, 75) d'au moins une autre station de travail (71, 72).

5. Dispositif composant un robot (1, 60) pour la mise en oeuvre du procédé selon la revendication 1, caractérisé en ce qu'il comprend un bloc de serrage (9, 73—75), qui peut être fixé à un élément (5) d'une station de travail (2, 70—72) et est équipé d'organes de positionnement (45, 50, 50'), et un porte-pièce (17, 66), qui est muni, d'une part, d'organes de positionnement complémentaires (28, 34, 34') d'au moins une partie de ceux du bloc de serrage (9, 73—75) et destinées à coopérer avec ces derniers de manière à maintenir fermement le porte-pièce (17, 66) dans une position bien déterminée à la station de travail (2, 70—72), et, d'autre part, d'organes de serrage (36, 37) adaptés à la géométrie des pièces (18, 68) d'une série à charger, de façon à tenir successivement chacune de ces pièces dans une position bien déterminée par rapport à ses organes de positionnement (28, 34, 34'), ce porte-pièce (17, 66) étant destiné à être tenu par le robot (1, 60) qui l'amène cycliquement, d'abord, d'une position de chargement jusqu'en position d'engagement des organes de positionnement (28, 34, 34'; 45, 50, 50') du porte-pièce (17, 66) et du bloc de serrage (9, 73—75), puis de cette dernière position jusqu'en position de déchargement.

6. Dispositif selon la revendication 5, caractérisé en ce que les organes de positionnement (28, 34, 34'; 45, 50, 50') du bloc de serrage (9) et du porte-pièce (17) comprennent au moins une fiche (28), dont l'extrémité est taillée en pointe et qui est portée par l'un (17) de ces deux éléments (9, 17), une ouverture (45) correspondante de l'autre élément, des butées (35) limitant la profondeur d'engagement de cette fiche (28) dans ladite ouverture (45) et des moyens de blocage (48) capables d'enserrer fermement ladite fiche (28) à l'intérieur de ladite ouverture (45) dans une position bien déterminée.

7. Procédé selon la revendication 6, caractérisé en ce que le porte-pièce (17) est garni d'un pivot (28) et d'au moins un piton (34, 34'), pivot et piton étant cylindriques, en ce que le bloc de serrage (9) présente un alésage (45) destiné à recevoir le pivot (28) du porte-pièce, une partie annulaire (48) de la paroi de cet alésage (45) étant mince et pouvant être déformée élastiquement par pression hydraulique de façon à constituer lesdits moyens de blocage et en ce que le bloc de serrage (9) présente en outre une couronne d'alésages (50, 50'; 51, 51'; 52, 52'; 53, 53'), dans chacun desquels un piton du porte-pièce peut s'engager afin de fixer le porte-pièce (17) dans différentes positions angulaires au bloc de serrage (9).

8. Dispositif selon l'une des revendications 5 à 7, caractérisé en ce que le bloc de serrage (9) est équipé d'organes (56, 59) capables de renforcer le serrage de la pièce (22) tenue par le porte-pièce.

9. Dispositif selon l'une des revendications 6 à 8, caractérisé en ce que le porte-pièce (17) comprend une semelle (23) portant les fiches de positionnement (28, 34, 34') et les butées (35) délimitant la profondeur d'engagement de ces fiches (28, 34, 34'), et des organes de serrage (36, 37) montés amoviblement sur cette semelle (23).

## Patentansprüche

1. Verfahren zum automatischen Beschicken von Bearbeitungsstationen, in welchem die Werkstücke einer Serie zu beschicken zunächst nach einander durch einen Roboter von einer Ladestelle zu einer Bearbeitungsstation, dann, am Ende der Bearbeitung, zu einer Ausladestelle überführt werden, dadurch gekennzeichnet, dass der Robot (1, 60), mittels eines Werkstückträgers (17, 66), den er hält, und welcher der Geometrie der Werkstücke der Serie zu beschicken, der Werkstück (18, 68) greift, das sich in Ladestelle befindet, dass an der Bearbeitungsstation (2, 70—72) der Robot (1, 60) den Werkstückträger (17, 66) gegenüber einem Greifblock (9, 73—75) stellt, der an einem Element (5) der Werkstückträger (2) derart befestigt ist, dass dieser Greifblock den Werkstückträger (17, 66) befestigen kann und somit des Werkstück (18, 68), welches er überführt hat, in einer wohl bestimmten Lage festhält, und dass beim Ueberführen des Werkstückes (18, 68) in Ausladestelle, der Robot (1, 60) dem Werkstückträger (17, 66) die Möglichkeit erteilt, das bearbeitete Werkstück zu befreien, während er diesen Werkstückträger weiterhin festhält.

2. Verfahren nach Anspruch 1, dadurch gekennzeichnet, dass der Robot (1) den Werkstückträger (17) aufgibt, sobald dieser durch den Greifblock (9) gefasst worden ist, und diesen am Ende der Bearbeitung des Werkstückes (22) wieder aufnimmt.

3. Verfahren nach Anspruch 1, dadurch gekennzeichnet, dass der Robot (1) den Werkstückträger (17) mit Hilfe einer Zange (16) ununterbrochen festhält, und dass er an der Bearbeitungsstation (2) der genannten Zange (16) gestattet, die Bewegungen des an einem beweglichen Element (5) der Bearbeitungsstation (2) befestigten Greifblocks (9) frei zu verfolgen.

4. Verfahren nach Anspruch 3, dadurch gekennzeichnet, dass der Robot (60), bevor er den Werkstückträger (66) an die Ausladestelle bringt, diesen Werkstückträger (66) vor den Greifblock (74, 75) wenigstens einer anderen Bearbeitungsstation (71, 72) führt.

5. Einen Robot (1, 60) umfassende Vorrichtung zur Durchführung des Verfahrens nach Anspruch 1, dadurch gekennzeichnet, dass sie einen Greifblock (9, 73—75), der an einem Element (5) einer Bearbeitungsstation (2, 70—72) befestigt werden kann und mit positionierenden Organen (45, 50, 50') ausgerüstet ist und einem Werkstückträger (17, 66) aufweist, der einerseits mit komplementären positionierenden Organen (28, 34, 34') wenigstens eines Teils derjenigen des Greifblocks (9, 73—75) und mit letzteren mitzuwirken bestimmt sind, damit der Werkstückträger (17, 66) in einer wohl bestimmten Lage in der Bearbeitungsstation (2, 70—72) sicher festgehalten ist, und anderseits Greiforgane (36, 37) besitzt, die der Geometrie der Werkstücke (18, 68) einer zu beschickenden Serie angepasst sind, damit jedes dieser Werkstücke der Reihe nach in einer wohl bestimmten Lage in bezug auf seine positionierenden Organe (28, 34, 34') festgehalten wird, wobei der Werkstückträger (17, 66) bestimmt ist, durch den Robot (1, 60) festgehalten zu sein, der ihn zyklisch zunächst von einer Ladestelle bis in eine Eingriffslage der positionierenden Organe (28, 34, 34'; 45, 50, 50') des Werkstückträgers (17, 66) und des Greifblocks (9, 73—75), und dann von letzteren Position bis in Ausladestelle überführt.

6. Vorrichtung nach Anspruch 5, dadurch gekennzeichnet, dass die positionierenden Organe (28, 34, 34'; 45, 50, 50') des Greifblocks (9) und des Werkstückträgers (17) mindestens einen Stift (28), dessen End gespitzt ist und welcher durch ein (17) dieser zwei Elementen (9, 17) getragen ist, eine entsprechende Bohrung (45) des anderen Elementen, Anschläge (35) zur Begrenzung der Eindringungstiefe des Stiftes (28) in die genannte Bohrung (45) und Sperrmittel (48) aufweisen, die fähig sind, den genannten Stift (28) innerhalb der genannten Bohrung (45) in einer wohl bestimmten Lage festzuhalten.

7. Vorrichtung nach Anspruch 6, dadurch gekennzeichnet, dass der Werkstückträger (17) mit einem Zapfen (28) und mindestens einem Dorn (34, 34') ausgerüstet ist, wobei Zapfen und Dorn zylindrisch sind, dass der Greifblock (9) eine Bohrung (45) aufweist, die bestimmt ist, den Zapfen (28) des Werkstückträgers aufzunehmen, wobei ein ringförmiger Teil (48) der Wand dieser Bohrung (45) dünn und elastisch durch einen hydraulischen Druck deformierbar ist, zum Zwecke die genannten Sperrmittel auszubilden, und dass der Greifblock (9) ausserdem eine Krone von Bohrungen (50, 50'; 51, 51'; 52, 52'; 53, 53') aufweist, in jede von ihnen ein Dorn des Werkstückträgers zur Befestigung des Werkstückträgers (17) am Greifblock (9) in verschiedenen Winkellagen einführbar ist.

8. Vorrichtung nach einem der Ansprüche 5 bis 7, dadurch gekennzeichnet, dass der Greifblock (9) mit Organen (56, 59) ausgerüstet ist, die fähig sind, das Festhalten des vom Werkstückträger gehaltenen Werkstückes (22) zu verstärken.

9. Vorrichtung nach einem der Ansprüche 6 bis 8, dadurch gekennzeichnet, dass der Werkstückträger (17) eine Grundplatte (23), die die positionierenden Stifte (28, 34, 34') trägt und die Anschläge (35), welche die Eindringungstiefe dieser Stifte (28, 34, 34') begrenzt, und Fassorgane (36, 37) aufweist, welche auf dieser Grundplatte (23) abnehmbar angeordnet sind.

**Claims**

1. Method for automatically loading work stations, wherein the workpieces of a series to be loaded are conducted after one another by a robot, firstly, from a loading position to a work station, then, at the end of the work, to an unloading position, characterized in that the robot (1, 60) by means of a workpieceholder (17, 66) that he holds and which is adapted to the geometry of the workpieces of the series to be loaded, takes the workpiece (18, 68) which is in loading position, in that, at the work station (2, 70—72), the robot (1, 60) places the workpieceholder (17, 66) opposite a gripping block (9, 73—75) fixed to a member (5) of the work station (2) in order that this gripping block may take the workpieceholder (17, 66) and thus hold the workpiece (18, 68) it conducted in a well determined position, and in that while conducting the workpiece (18, 68) in unloading position, the robot (1, 60) permits the workpieceholder (17, 66) to release the machined workpiece while further holding the workpieceholder.

2. Method according to claim 1, characterized in that the robot (1) leaves the workpieceholder (17) as soon as the latter has been taken by the gripping block (9) and comes to take it again at the end of the work on the workpiece (22).

3. Method according to claim 1, characterized in that the robot (1) permanently holds the workpieceholder (17) by means of pliers (16), and in that, at the work station (2), it permits said pliers (16) to freely follow the displacements of the gripping block (9) fixed to a movable member (5) of the work station (2).

4. Method according to claim 3, characterized in that before conducting the workpieceholder (66) into the unloading position, the robot (60) conducts this workpieceholder (66) opposite the gripping block (74, 75) of at least another work station (71, 72).

5. Device comprising a robot (1, 60) for carrying out the method according to claim 1, characterized in that it comprises a gripping block (9, 73—75), which can be fixed to a member (5) of a work station (2, 70—72) and is equipped with positioning means (45, 50, 50'), and a workpieceholder (17, 66) which is provided, on the one hand, with complementary positioning means (28, 34, 34') of at least a part of those of the gripping block (9, 73—75) and are arranged for cooperating with the latter in order to firmly maintain the workpieceholder (17, 66) in a well determined position at the work station (2, 70—72), and, on the other hand, with clamping means (36, 37) adapted to the geometry of the workpieces (18, 68) of a series to be loaded, in order to successively hold every one of those workpieces, in a well determined position with respect to its positioning means (28, 34, 34'), the workpieceholder (17, 66) being arranged for being held by the robot (1, 60) which cyclically conducts it, at first, from a loading position to a position of engagement of the positioning means (28, 34, 34'; 45, 50, 50') of the workpieceholder (17, 66) and of the gripping block (9, 73—75), then from the latter position to an unloading position.

6. Device according to claim 5, characterized in that the positioning means (28, 34, 34'; 45, 50, 50') of the gripping block (9) and of the workpieceholder (17) comprise at least one projecting means (28), the end of which is pointed, and which is carried by one (17) of these two members (9, 17), a corresponding opening (45) of the other member, abutting means (35) limiting the depth of engagement of this projecting means (28) into said opening (45) and locking means (48) capable of firmly gripping said projecting means (28) within said opening (45) in a well determined position.

7. Device according to claim 6, characterized in that the workpieceholder (17) is provided with a pivot (28) and at least a pin (34, 34'), pivot and pin being cylindrical, in that the gripping block (9) comprises a boring (45) arranged to receive the pivot (28) of the workpieceholder, an annular portion (48) of the wall of this boring (45) being thin and being able to be elastically deformed by a hydraulic pressure so as to constitute said locking means, and in that the gripping block (9) further comprises a crown of borings (50, 50'; 51, 51'; 52, 52'; 53, 53'), into every one of which a pin of the workpieceholder can be inserted to fix the workpieceholder (17) in different angular positions to the gripping block (9).

8. Device according to one of the claims 5 to 7, characterized in that the gripping block (9) is equipped with means (56, 59) capable to reinforce the gripping action on the workpiece (22) held by the workpieceholder.

9. Device according to one of the claims 6 to 8, characterized in that the workpieceholder (17) comprises a base plate (23) carrying the positioning (28, 34, 34') and the abutting means (35) limiting the depth of engagement of the positioning means (28, 34, 34'), and gripping means (36, 37) removably mounted on the base plate (23).

FIG. 1

FIG. 2

FIG. 3

EP 0 185 286 B1

FIG. 4

FIG. 5

EP 0 185 286 B1